# EUROPEAN PATENT APPLICATION

(11) **EP 1 983 233 A1**
(43) Date of publication of application: **22.10.2008**
(21) Application number: 06712718.3
(22) Date of filing: 31.01.2006
(51) Int. Cl.: F16J 12/00, F16J 3/02

(54) **BELLOWS FOR PRESSURE VESSEL**

(71) Applicant: Shi Mechanical & Equipment Inc., Saijo-shi, Ehime, 7991393 (JP)
(72) Inventor: MORINAGA, Shoji, Saijo-shi Ehime 7991393 (JP); ITO, Koji, Saijo-shi Ehime 7991393 (JP); NISHIMI, Haruyuki, Saijo-shi Ehime 7991393 (JP); KANEMORI, Yoriyuki, Saijo-shi Ehime 7991393 (JP); MORI, Yuji, Saijo-shi Ehime 7991393 (JP); YAMAJI, Kiichiro, Saijo-shi Ehime 7991393 (JP)
(74) Representative: Skuhra, Udo
(86) International application number: PCT/JP2006/301575
(87) International publication number: WO 2007/088592

(57) **Abstract**

There is provided a bellows for a pressure vessel that would not rupture due to thermal expansion and contraction, avoiding stagnation of a raw material. The bellows 40 for a pressure vessel is adapted to realize ring-shaped sealing between an open end 11 of a bottomed tubular vessel body 10 into which a raw material is caused to flow, and an outer peripheral portion of a dispersion board 30 closing the open end 11 so as to permit downflow of the raw material toward the bottom of the vessel body 10. The bellows 40 is provided with a flexure portion 41 flexing radially so as to permit thermal expansion and contraction without being depressed for avoiding of stagnation of the raw material. The flexure portion 41 has a concave curved surface 42 and a convex curved surface 43 which are continuously formed to have a wave shape.

## Description

### TECHNICAL FIELD

The present invention relates to a ring-shaped bellows for a pressure vessel which seals an opening end of a bottomed tubular vessel body, and an outer peripheral portion of a dispersion board which closes this opening end, and specifically, to a ring-shaped bellows for a pressure vessel which is put into a state of being not heated from a state of being heated to a high temperature and which is used under the situation of thermal expansion and contraction.

### BACKGROUND ART

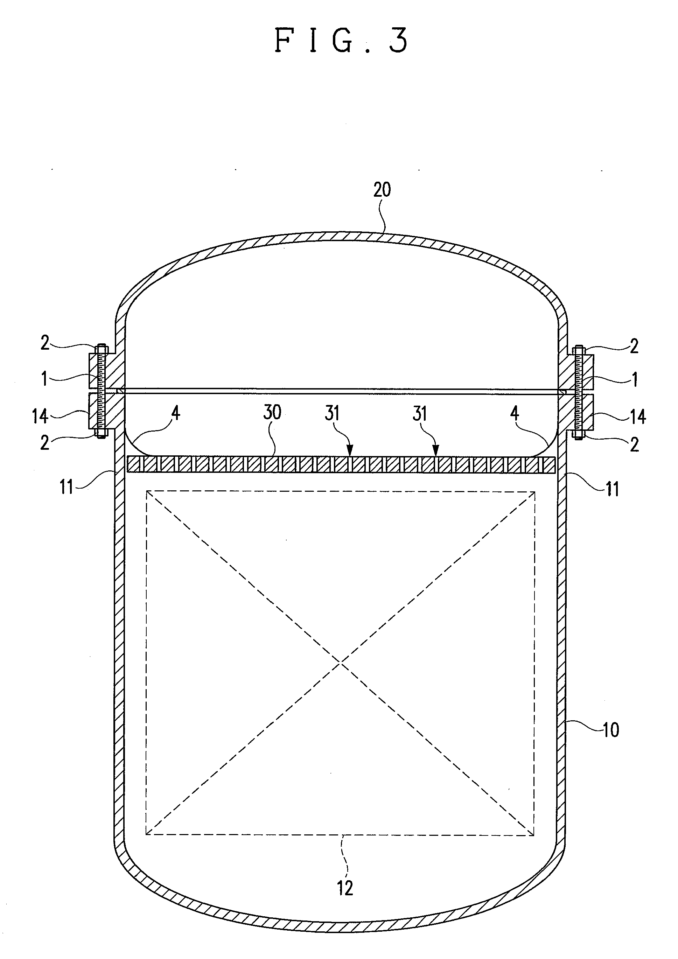

As an apparatus which polymerizes resin, a pressure vessel as shown in FIGS. 3 to 5 is used. This pressure vessel includes a bottomed tubular vessel body 10 in a vertical posture provided with an opening end 11, and a lid 20 which covers the opening end 11. The inside of the vessel body 10 is provided with parts 12 for polymerizing resin.

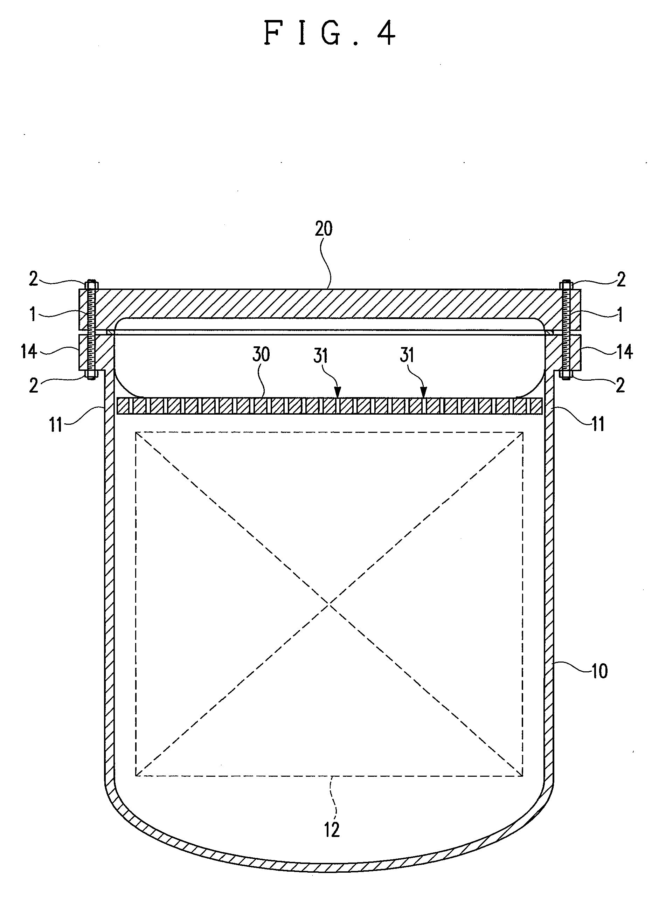

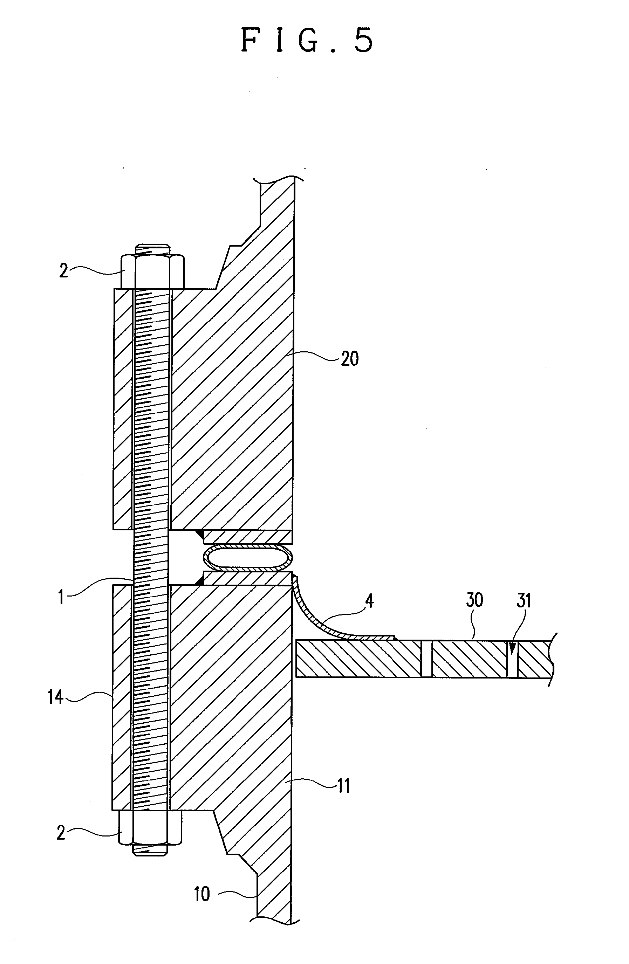

Inside the opening end 11, a dispersion board 30 formed with a number of holes 31, ..., and 31 is fixed on a seat (not shown) provided so as to protrude from an inner peripheral surface of the vessel body 10. A gap is formed between the vessel body 10 and the dispersion board 30. Although FIG. 5 is a schematic diagram in which essential parts of the pressure vessel shown in FIG. 3 are enlarged, the pressure vessel shown in FIG. 4 is also the same in its basic configuration.

Further, a ring-shaped bellows 4 formed with a concave curved surface seals between an outer peripheral portion of an upper face of the dispersion board 30 and an inner peripheral surface of the opening end 11 of the vessel body 10. A lower end edge of bellows 4 is welded to the outer peripheral portion of the upper face of the dispersion board 30, and an upper end edge of the bellows 4 is welded to the inner peripheral surface of the opening end 11 of the vessel body 10, whereby the gap between the dispersion board 30 and the vessel body 10 is eliminated.

The opening end 11 of the vessel body 10 is provided with an outward flange 14, an outer peripheral portion of the lid 20 is joined to the outward flange 14, and both the opening end 11 and the lid 20 are fixed together by bolts 1 and nuts 2. As the lid 20, there are a semi-spherical or semi-elliptical lid as shown in FIG. 3, and a thick plate-shaped lid as shown in FIG. 4.

Also, a number of jackets (not shown) through which heating medium oil with a high temperature of, for example, about 250 to 400°C flows are additionally provided at an upper face of the lid 20 and at an outer peripheral surface of the vessel body 10. Moreover, the inside of the pressure vessel is kept in a high vacuum state, and a raw material is made to flow in from a portion of the lid 20. The raw material passes through the holes 31, ..., and 31 of the dispersion board 30 while being heated, and flows down into the vessel body 10.

The bellows 4 stops the raw material from flowing down into the vessel body 10 from a portion between the vessel body 10 and the dispersion board 30. Further, since the bellows 4 is formed with a concave curved surface, the raw material which has flowed down onto the bellows 4 moves toward through the holes 31, ..., and 31 of the dispersion board 30, and flows down into the vessel body 10 the holes 31, ..., and 31 without stagnation.

While the raw material which has flowed into the vessel body 10 is heated, resin is polymerized by the parts 12, and this resin is discharged from a lower end of the vessel body 10. Since stagnation of the raw material on the bellows 4 is avoided, mixing of gel caused by thermal deterioration can be prevented.

In addition, even in an apparatus for filling liquid gas or pressurized substance, a pressure vessel of the same configuration as the aforementioned one is used.

### DISCLOSURE OF THE INVENTION

### PROBLEM TO BE SOLVED BY THE INVENTION

The pressure vessel expands as being heated, and contracts when the heating ends. Accordingly, the bellows 4 welded to the opening end 11 of the vessel body 10 and an outer peripheral portion of the dispersion board 30 also contracts thermally. However, since the bellows 4 is welded to and constrained by the vessel body 10 and the dispersion board 30, respectively, at the end edges thereof, and is formed as a concave curved surface, there is no sufficient margin for thermal contraction. Therefore, excessive thermal stress may be caused in the bellows 4. Then, the bellows 4 ruptures, a liquid raw material is stagnated in the gap between the dispersion board 30 and the vessel body 10, and resin of inferior quality in which gel is formed is polymerized.

Then, an object of the invention is to provide a bellows for a pressure vessel which would not rupture due to thermal expansion and contraction, while avoiding stagnation of a raw material.

### MEANS FOR SOLVING THE PROBLEM

According to the present invention, there is provided a bellows for a pressure vessel adapted to realize ring-shaped sealing between an open end of a bottomed tubular vessel body and an outer peripheral portion of a dispersion board closing the open end. The bellows is formed with a flexure portion flexing radially so as to permit thermal expansion and contraction without being depressed.

According to this bellows for a pressure vessel, the bellows is formed with a flexure portion flexing radially so as to permit thermal expansion and contraction without being depressed. Thereby, the bellows can be hardly ruptured even if the vessel body or the dispersion board expands and contracts thermally when the temperature of the vessel body is raised or lowered in order to make a raw material within the vessel body reacted or stopped.

Further, in the bellows for a pressure vessel of the invention, it is preferable that the vessel body is designed to permit a raw material to flow thereinto through the opening end, the dispersion board is designed to permit the raw material to flow down toward the bottom of the vessel body, and the flexure portion is formed so as not to cause stagnation of the raw material. According to this bellows for a pressure vessel, the flexure portion is formed so as not to cause stagnation of the raw material. Thereby, since the raw material caused to flow into the vessel body is unlikely to stagnate on the flexure portion, products with no gel formed therein can be manufactured.

Further, in the bellows for a pressure vessel of the present invention, preferably, the flexure portion has a concave curved surface and a convex curved surface which are continuously formed to have a wave shape. According to this bellows for a pressure vessel, the flexure portion has the concave curved surface and the convex curved surface which are continuously formed to have a wave shape, and the convex curved surface is not constrained in its protruding direction or in a direction opposite to its protruding direction. Thereby, thermal expansion and contraction of the bellows is permitted. Also, the concave curved surface is not formed, for example, in such a depressed shape that the raw material stagnates.

### ADVANTAGE OF THE INVENTION

According to a bellows for a pressure vessel of the invention, ring-shaped sealing is realized between an open end of a bottomed tubular vessel body and an outer peripheral portion of a dispersion board closing the open end, and the bellows is formed with a flexure portion flexing radially so as to permit thermal expansion and contraction without being depressed. Thereby, the bellows can be hardly ruptured even if the vessel body or the dispersion board expands and contracts thermally. Accordingly, gel is not formed in the resin polymerized by the pressure vessel, and the yield can be improved.

### BRIEF DESCRIPTION OF THE DRAWINGS

FIG. 1 is an enlarged sectional view showing one embodiment of a bellows for a pressure vessel of the present invention.
FIG. 2 is a partial sectional schematic perspective view showing one embodiment of the bellows for a pressure vessel of the present invention.
FIG. 3 is a schematic sectional view showing an example of the pressure vessel.
FIG. 4 is a schematic sectional view showing an example of a pressure vessel different from the above one.
FIG. 5 is an enlarged sectional view showing a bellows for a conventional pressure vessel.

### REFERENCE NUMERALS

10: VESSEL BODY
11: OPENING END
20: LID
30: DISPERSION BOARD
40: BELLOWS
41: FLEXURE PORTION
42: CONCAVE CURVED SURFACE
43: CONVEX CURVED SURFACE

### PREFERRED EMBODIMENTS FOR CARRYING OUT THE INVENTION

One embodiment of a bellows of a pressure vessel of the present invention will be described referring to the drawings. It is to be noted herein that the description will be made by allocating the same reference numerals as conventional ones to the same portions. As shown in FIGS. 3 or 4, this pressure vessel also includes a bottomed vessel body 10 in a vertical posture provided with an opening end 11, and a lid 20 which covers the opening end 11, and an outward flange 14 provided at the opening end 11 of the vessel body 10 and an outer peripheral portion of the lid 20 are fastened together by bolts 1 and nuts 2.

Also, a dispersion board 30 formed with a number of holes 31, ..., and 31 is fixed within the opening end 11 provided with the outward flange 14. The dispersion board 30 is fixed on a seat (not shown) protruding from an inner peripheral surface of the vessel body 10, and a gap is formed between the dispersion board and the inner surface of the vessel body 10.

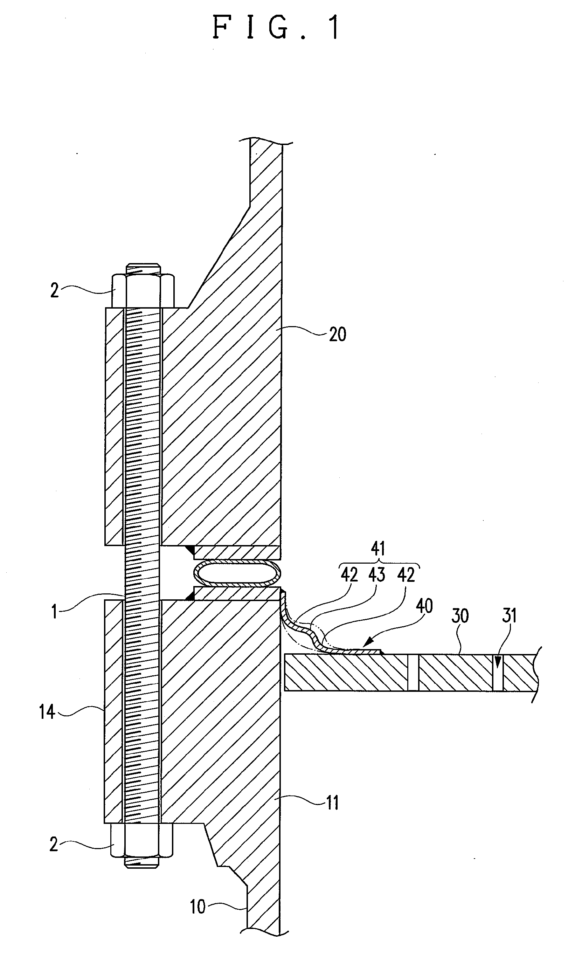

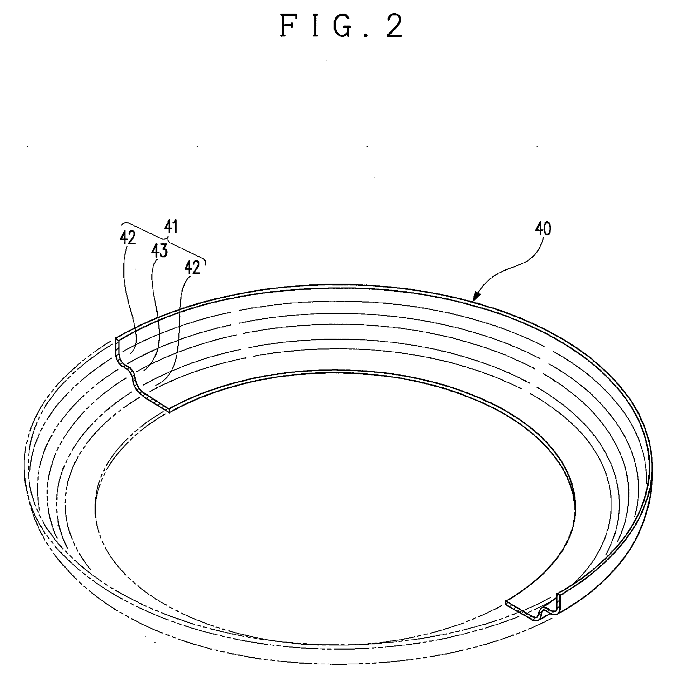

A bellows 40 seals between the opening end 11 of the vessel body 10 and an outer peripheral portion of the dispersion board 30. The bellows 40 is characterized by forming a flexure portion 41 which flexes radially so as to permit thermal expansion and contraction without being depressed. That is, as shown in FIGS. 1 and 2, the bellows 40 is formed with the flexure portion 41 which flexes so as to hardly rupture, even if the vessel body 10 or the dispersion board 30 expands and contracts thermally when the temperature of the vessel body 10 is raised or lowered in order to make a raw material within the vessel body 10 reacted or stopped.

The flexure portion 41 is formed by a concave curved surface 42 and a convex curved surface 43 that are continuously formed to have a wave shape in radial cross section. That is, the concave curved surface 42 is formed along each end edge of the bellows 40, and the convex curved surface 43 is formed so as to be held between both the concave curved surfaces 42. Both the concave curved surfaces 42 are inclined such that a depression is not formed, and are adapted to be continuous with the convex curved surface 43. Also, the end edges of the bellows 40 are respectively welded to an inner peripheral surface of the opening end 11 of the vessel body 10 and the surface of the dispersion board 30 such that a gap is not formed between the vessel body 10 and the dispersion board 30.

In the pressure vessel including such a bellows 40, a liquid raw material is caused to flow in through a portion of the lid 20, and resin is polymerized as this raw material is heated in a high vacuum atmosphere. At this time, the raw material caused to flow in through the lid 20 flows down into the vessel body 10 from a number of holes 31, ..., and 31, without stagnating on the concave curved surfaces 42 of the bellows 40. Accordingly, since a stagnating portion of a raw material is not formed, mixing of gel into the resin to be polymerized can be prevented.

Also, as the vessel body 10, the outward flange 14 and the lid 20 are heated, heat is transferred to the dispersion board 30 within the vessel body 10 by heat conduction, stagnation, or radiation. However, compared with the outward flange 14 to which heat is transferred directly, the temperature rise of the dispersion board 30 is delayed. As a result, the gap between both the outward flange 14 and the dispersion board 30 changes due to the thermal expansion difference between the outward flange 14 and the dispersion board 30.

However, since the bellows 40 which seals between the vessel body 10 and the dispersion board 30 by welding is formed with the concave curved surfaces 42 and the convex curved surface 43 which are continuously formed to have a wave shape, the convex curved surface 43 is not constrained in its protruding direction. Therefore, as shown by two-dot chain lines of FIG. 1, the convex curved surface 43 expands so as to protrude slightly. In this expanded bellows 40, a depressed portion where a raw material stagnates is not caused.

Further, when the reaction of the raw material ends, the vessel body 10, the outward flange 14 and the lid 20 are cooled and contract. Since the bellows 40 which seals between the vessel body 10 and the dispersion board 30 by welding is formed with the concave curved surfaces 42 and the convex curved surface 43 which are continuously formed to have a wave shape, the convex curved surface 43 is not constrained in a direction opposite to its protruding direction. Therefore, the convex curved surface 43 is recessed slightly, and as shown by one-dot chain lines of FIG. 1, contract as a concave curved surface without rupturing. A depressed portion where a raw material stagnates is not formed in the bellows 40 contracted in this way, and the bellows also does not rupture since it contracts as a concave curved surface.

Also, as the raw material caused to flow into the pressure vessel is heated in a high vacuum atmosphere without stagnation, resin is polymerized. Since this resin does not cause gel therein, high-quality resin that meets the standards is obtained.

The present invention is not limited to the above embodiment, but can be variously changed within the scope of the particulars of the present invention set forth in the claims. For example, this pressure vessel can also be used not as an apparatus for polymerizing resin, but as an apparatus which fills liquid gas or pressurized substance.

Further, the pressure vessel can be similarly implemented not in a vertical posture but in a horizontal posture and in an inclined posture. Moreover, the bellows 40 is not limited to the flexure portion 41 in which a row of convex curved surface 43 is formed between two rows of concave curved surfaces 42 of two rows as shown in the drawings, but three or more rows of concave curved surfaces 42 and two or more rows of convex curved surfaces 43 can be continuously formed to have a wave shape.

### INDUSTRIAL APPLICABILITY

The seal structure of the pressure vessel of the present invention can be effectively utilized for a pressure vessel which is used as an apparatus which polymerizes resin, or an apparatus which fills liquid gas or pressurized substance.

## Claims

1. A bellows for a pressure vessel adapted to realize ring-shaped sealing between an open end of a bottomed tubular vessel body and an outer peripheral portion of a dispersion board closing the open end,
wherein the bellows is provided with a flexure portion flexing radially so as to permit thermal expansion and contraction without being depressed.

2. The bellows for a pressure vessel according to Claim 1,
wherein the vessel body is designed to permit a raw material to flow thereinto through the opening end, the dispersion board is designed to permit the raw material to flow down toward the bottom of the vessel body, and the flexure portion is formed so as not to cause stagnation of the raw material.

3. The bellows for a pressure vessel according to Claim 1 or 2,
wherein the flexure portion has a concave curved surface and a convex curved surface which are continuously formed to have a wave shape.
